# EUROPÄISCHE PATENTSCHRIFT

(11) **EP 2 418 555 B1**
(45) Veröffentlichungstag und Bekanntmachung des Hinweises auf die Patenterteilung: **13.01.2016**
(21) Anmeldenummer: 11164755.8
(22) Anmeldetag: 04.05.2011
(51) Int. Cl.: G05B 19/4061, B25J 9/16

(54) **Verfahren zur Offline-Programmierung eines NC-gesteuerten Manipulators**
Offline programming method of a NC-powered manipulator
Procédé de programmation hors ligne d'un manipulateur à commande NC

(30) Priorität: 30.07.2010 DE 102010032917
(43) Veröffentlichungstag der Anmeldung: 15.02.2012
(73) Patentinhaber: Brötje-Automation GmbH, 26215 Wiefelstede (DE)
(72) Erfinder: Eickhorst, Dirk, 26316 Varel-Altjuhrden (DE)
(74) Vertreter: Gottschald, Jan

(56) Entgegenhaltungen:
- DE-A1-102008 027 475
- EVERETT L J ET AL: "Automatic singularity avoidance using joint variations in robot task modification", IEEE ROBOTICS & AUTOMATION MAGAZINE, IEEE SERVICE CENTER, PISCATAWAY, NJ, US, Bd. 1, Nr. 3, 30. September 1994 (1994-09-30), Seiten 13-19, XP011420425, ISSN: 1070-9932, DOI: 10.1109/100.326724

## Beschreibung

Die vorliegende Erfindung betrifft ein Verfahren zur Offline-Programmierung eines NC-gesteuerten Manipulators gemäß Anspruch 1.

NC-gesteuerte Manipulatoren finden sich heute in der automatisierten Fertigung oft als sechsachsige Knickarmroboter. Aufgrund der komplexen Arbeitsabläufe stellt die Programmierung solcher Manipulatoren hohe Anforderungen an den Benutzer.

Um möglichst wenig Online-Zeit für die Programmierung aufwenden zu müssen, ist in vielen Bereichen dazu übergegangen worden, die Programmierung weitestgehend offline durchzuführen. Dabei wird das betreffende NC-Programm von der Fertigungslinie zeitlich und ggf. auch räumlich entkoppelt erzeugt.

Ein bekanntes Offline-Programmiersystem für einen NC-gesteuerten Manipulator stellt eine Simulation bereit, in der Bewegungsbahnen simuliert und programmiert werden können (EP 1 832 947 A2). Auch die Simulation und Programmierung sensorgestützter Bewegungsbahnen ist mit diesem Offline-Programmiersystem möglich. Hierfür ist die Modellierung und Simulation eines dem Manipulator zugeordneten Sensors vorgesehen. In einem Postprozessor wird dann regelmäßig ein NC-Programm erzeugt, so dass die simulierten, virtuellen Bewegungsbahnen in reale Bewegungsbahnen überführt werden.

Problematisch bei der Offline-Programmierung ist die Tatsache, dass die realen Gegebenheiten niemals vollständig mit den virtuellen Gegebenheiten übereinstimmen. Dies betrifft das Auftreten geometrischer Abweichungen am Manipulator und an Umgebungskomponenten wie Werkstücken o. dgl.. Dies betrifft aber auch steuerungstechnische Maßnahmen zur Achskompensation, um umgebungsbedingte Veränderungen der Manipulatorkinematik auszugleichen.

Die erstgenannten Abweichungen lassen sich sensorisch korrigieren. Diese Korrektur ist stets mit einer gewissen Verlagerung des Tool-Center-Points (TCP) des Manipulators verbunden. Die letztgenannten Abweichungen dagegen äußern sich in Offsets in den Achswerten.

Beide oben genannten Abweichungen können dazu führen, dass der Manipulator im Arbeitsbetrieb in Singularitäten hineinläuft. Dies ist in der Regel mit einem Stillstand der Fertigungslinie und der Notwendigkeit eines Nachteachens der Bewegungsbahnen verbunden. Das Wiederanfahren sowie der Produktionsausfall sind meist mit erheblichen Kosten verbunden.

Die DE 10 2008 027 475 A1 beschreibt eine Vorrichtung und ein Verfahren, bei dem eine virtuelle Manipulatorbahn auf Basis einer virtuellen Werkzeugbahn und einer virtuellen Manipulatorkinematik generiert wird. Es findet dabei eine Überprüfung auf Singularitäten entlang der jeweiligen Bahnen statt. Es wird davon ausgegangen, dass die generierte Bahn zu der tatsächlichen Bahn praktisch identisch ist.

Aus dem Fachartikel "Automatic Singularity Avoidance Using Joint Variations in Robot Task Modification" von Everett, Colson und Mooring, erschienen in IEEE Robotics & Automation Magazine vom September 1994, wird ein Ansatz beschrieben, mit dem Anpassungen einer Bewegungsbahn berechnet werden können, welche sich durch eine Änderung am Manipulator, wie z. B. durch eine neue Werkzeugbestückung, ergeben. Dabei können für einzelne Ansteuerungspunkte Beschränkungen vorgegeben werden, welche bei der Bahnplanung für die angepasste Bewegungsbahn berücksichtigt werden. Eine Prüfung auf das Auftreten von Singularitäten, welche sich aus toleranzbedingten Abweichungen von der Bewegungsbahn ergeben, findet nicht statt.

Der Erfindung liegt das Problem zu Grunde, ein Verfahren zur Offline-Programmierung eines NC-gesteuerten Manipulators anzugeben, mit dem das Risiko des Auftretens von Singularitäten im realen Arbeitsbetrieb reduziert wird.

Das obige Problem wird durch ein Verfahren zur Offline-Programmierung gemäß Anspruch 1 gelöst.

Das vorschlagsgemäße Verfahren zur Offline-Programmierung eines NC-gesteuerten Manipulators, der im Arbeitsbetrieb mit seinem Tool-Center-Point (TCP) mindestens eine reale Bewegungsbahn abfährt, bedient sich einer Offline-Programmierumgebung mit Benutzungsschnittstelle. In der Offline-Programmierumgebung wird ein kinematisches Manipulatormodell und ggf. ein Umgebungsmodell gespeichert.

Wesentlich ist nun, dass mittels der Offline-Programmierumgebung in einer Definitionsroutine nicht nur mindestens eine virtuelle Bewegungsbahn des Manipulators definiert wird, sondern auch ein dieser Bewegungsbahn zugeordneter virtueller Toleranzraum. Dabei bildet der Toleranzraum Bahnabweichungen von der virtuellen Bewegungsbahn ab.

Der Toleranzraum läßt sich als Volumen, als eine Menge von Bahnabschnitten, als Punktewolke o. dgl. definieren. Wesentlich ist, dass der Toleranzraum jedenfalls die im realen Betrieb auftretenden, geometrischen Bahnabweichungen umfasst. Entsprechend umgibt der Toleranzraum meist die zugeordnete Bewegungsbahn oder schließt sich jedenfalls an die zugeordnete Bewegungsbahn an.

Wesentlich ist weiter, dass mittels der Offline-Programmierumgebung in einer Prüfroutine der zuvor definierte Toleranzraum zumindest zum Teil im Hinblick auf kinematische Singularitäten des Manipulators überprüft wird. Sofern eine Singularität auftritt, wird im Anschluss daran eine Singularitätsroutine durchlaufen.

Der Begriff "Auftreten einer Singularität" ist hier weit auszulegen. Damit ist einerseits die direkte Positionierung in einer Singularitätsstelle und andererseits das Unterschreiten eines vorbestimmten Abstands zu einer Singularitätsstelle gemeint.

Der Begriff "Singularität" ist ebenfalls weit auszulegen. Er umfasst sowohl "Singularitäten" im klassischen Sinne, die auf eine bestimmte Achskonfiguration, bei der zwei Achsen fluchtend angeordnet sind, zurückgeht. Der Begriff "Singularität" betrifft hier aber auch einfache Mehrdeutigkeiten in der Achskonfiguration, die Nichterreichbarkeit eines Bahnpunktes sowie die Kollision des Manipulators mit sich selbst. Weiter kann der Begriff "Singularität" auch eine Unstetigkeit im Bahnverlauf betreffen. Ganz generell ist mit "Singularität" ein Zustand gemeint, der von der NC-Steuerung ohne weitere Maßnahmen nicht umsetzbar ist und daher regelmäßig mit einem Anhalten der NC-Steuerung verbunden ist.

Mit dem vorschlagsgemäßen Verfahren ist es möglich, alle oben genannten Bahnabweichungen mittels Toleranzräumen abzubilden. Dadurch, dass eine vollständige Singularitätsüberprüfung nicht nur der Bewegungsbahnen, sondern auch der Toleranzräume im Offline-Betrieb durchgeführt werden kann, lässt sich das Auftreten von Singularitäten im späteren, realen Arbeitsbetrieb weitgehend ausschließen.

In einer bevorzugten, besonders einfach zu realisierenden Variante wird in der Singularitätsroutine über die Benutzungsschnittstelle lediglich eine Warnmeldung an den Benutzer ausgegeben. Der Benutzer kann dann die programmierte Bewegungsbahn so modifizieren, dass in dem zugeordneten Toleranzraum keine Singularitäten mehr auftreten. Die Beseitigung aller Singularitäten ist demnach ein interaktiver Prozess (Anspruch 2).

Nachdem alle Singularitäten beseitigt worden sind, ist es vorzugsweise vorgesehen, dass die virtuellen Bewegungsbahnen in Anweisungen eines NC-Programms umgesetzt werden (Anspruch 3).

Grundsätzlich ist es denkbar, dass die virtuellen Toleranzräume keinen Eingang in das NC-Programm finden, und nur bei der Offline-Prüfung auf Singularitäten herangezogen werden. Vorzugsweise ist es allerdings so, dass ein virtueller Toleranzraum derart in die Erzeugung des NC-Programms eingeht, dass das Überschreiten der Grenzen des korrespondierenden realen Toleranzraums im Arbeitsbetrieb steuerungstechnisch gesperrt wird. In diesem Fall kann der Benutzer zur Vermeidung von Singularitäten eine Verkleinerung des jeweiligen Toleranzraums im Offline-Programmierbetrieb vornehmen.

Grundsätzlich lässt sich die Definitionsroutine auch weiter automatisieren. Hierfür sind allerdings entsprechende Informationen über den Arbeitsablauf, der sich unter anderem aus dem Abfahren von Bewegungsbahnen und/oder dem Abarbeiten von Sensorfunktionen und/oder dem Abarbeiten von Technologiefunktionen ergibt, von der Programmierumgebung bereitzustellen (Anspruch 5).

Bei der bevorzugten Ausgestaltung gemäß Anspruch 6 wird in einer Alternative die virtuelle Bewegungsbahn automatisch basierend auf dem gespeicherten Arbeitsablauf generiert.

Bei der bevorzugten Ausgestaltung gemäß Anspruch 11 wird der mindestens eine Toleranzraum zumindest zum Teil aus den fiktiven Bahnabweichungen ermittelt, die sich maximal in jedem Bahnpunkt bei originärer Manipulatorkinematik aus der Achskompensation ergeben können. Mit "originärer Manipulatorkinematik" ist hier der Zustand der Manipulatorkinematik gemeint, der nicht aufgrund von Temperatur, Last o. dgl. irgendwelche Veränderungen erfahren hat. Man könnte auch sagen, dass die Achskompensation auf die originäre Manipulatorkinematik angewendet wird, so dass die Achs-Offsets in entsprechende Bahnabweichungen überführt werden.

Damit wird sichergestellt, dass Singularitäten, die ausschließlich auf eine ganz bestimmte Achskonfiguration zurückgehen, und die durch die steuerungstechnische Achskompensation im realen Arbeitsbetrieb verursacht sind, in dem Toleranzraum abgebildet werden und im Rahmen der Prüfroutine ermittelt werden können. In besonders bevorzugter Ausgestaltung werden die entsprechenden Bahnabweichungen zu den weiter oben genannten, auf geometrische Lageabweichungen zurückgehenden Bahnabweichungen hinzuaddiert.

Im Folgenden wird die Erfindung anhand einer lediglich ein Ausführungsbeispiel darstellenden Zeichnung näher erläutert. In der Zeichnung zeigt
- Fig. 1: eine getaktete Fertigungsstraße mit Manipulatoren, auf die das vorschlagsgemäße Offline-Programmierverfahren angewendet wird,
- Fig. 2: einen der Manipulatoren gemäß Fig. 1 während des realen Arbeitsbetriebs in einer ganz schematischen Ansicht,
- Fig. 3: einen anzufahrenden Punkt mit einer realen Bewegungsbahn für den Manipulator gemäß Fig. 2,
- Fig. 4: die beispielhafte Funktionsweise eines optischen Sensors bei der Annäherung des Manipulators an den Punkt gemäß Fig. 3 in einer Prinzipskizze,
- Fig. 5: einen Abschnitt einer beispielhaften virtuellen Bewegungsbahn in der Offline-Programmierumgebung mit zugeordnetem Toleranzraum.

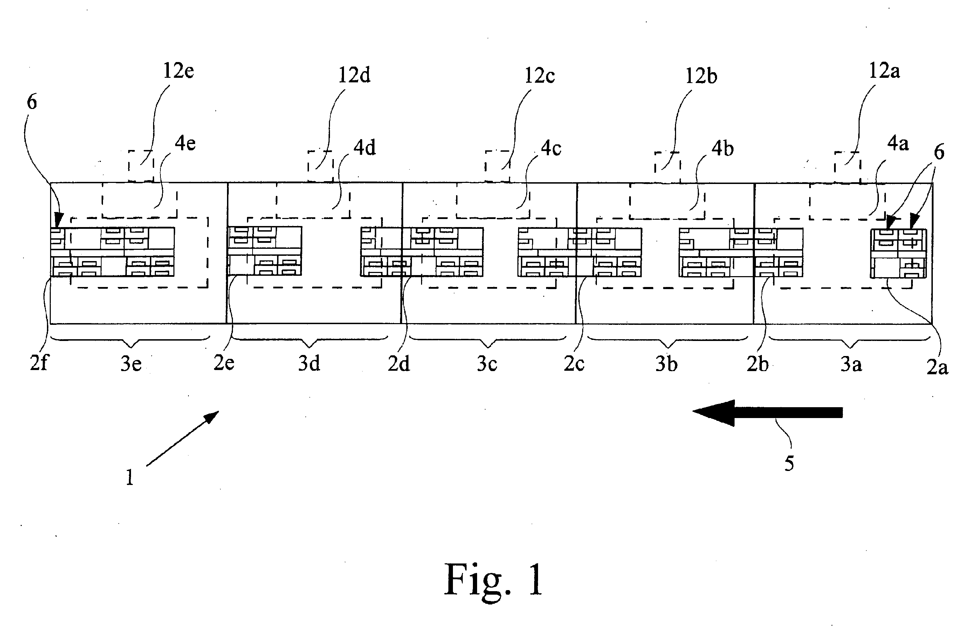

Die in Fig. 1 dargestellte Fertigungsstraße 1 dient der Bearbeitung von Flugzeug-Strukturbauteilen 2a-2f. Sie ist mit insgesamt fünf Bearbeitungsstationen 3a-3e ausgestattet, die jeweils eine Bearbeitungsmaschine 4a-4e, hier jeweils einen NC-gesteuerten Manipulator 4a-4e aufweisen. Selbstverständlich kann eine Bearbeitungsstation 3 auch mit zwei oder mehreren Bearbeitungsmaschinen 4 ausgestattet sein.

Bei den Flugzeug-Strukturbauteilen 2a-2f handelt es sich in dem dargestellten und insoweit bevorzugten Ausführungsbeispiel um Flugzeug-Rumpfsektionen 2a-2f, die entlang ihrer Längsachse durch die Bearbeitungsstationen 3a-3e gefördert werden. Die Längsachsen verlaufen dabei parallel zu der Förderrichtung, die in Fig. 1 mit einem Pfeil 5 dargestellt ist.

Die Flugzeug-Strukturbauteile 2a-2f sind jeweils mit einer Reihe von parallelen, in Fig. 1 lediglich angedeuteten Spanten 6 ausgestattet, die jeweils für sich im Wesentlich senkrecht zur Förderrichtung 5 verlaufen.

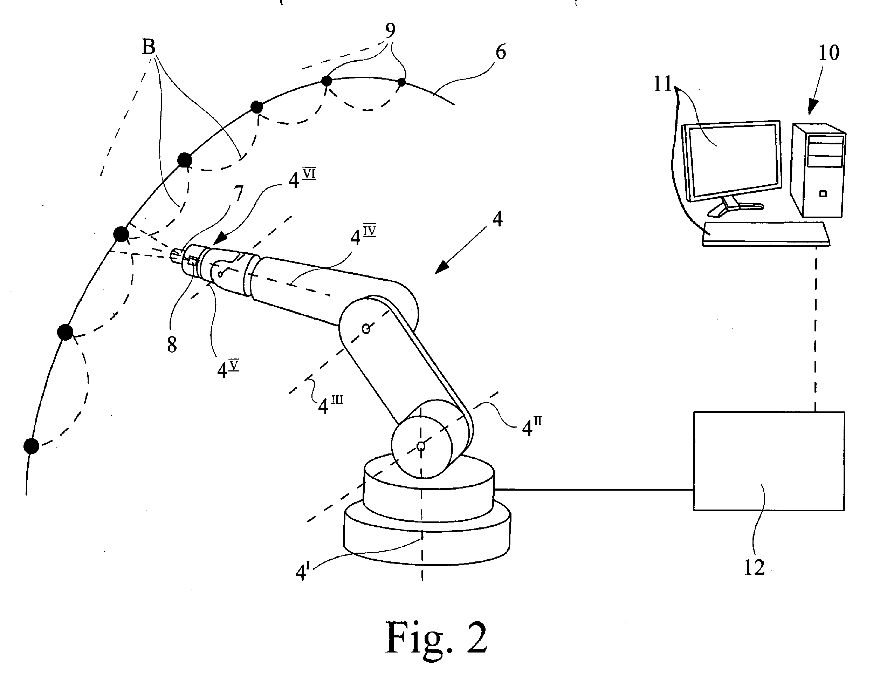

Fig. 2 zeigt beispielhaft einen Manipulator 4 der in Fig. 1 dargestellten Manipulatoren 4a-4e. In dem dargestellten Ausführungsbeispiel sind an den Spanten 6 Nietoperationen durchzuführen. Der Manipulator 4 ist hierfür mit einem in Fig. 2 schematisch dargestellten Nietwerkzeug 7 ausgestattet.

Für die Erläuterung des vorschlagsgemäßen Verfahrens zur Offline-Programmierung steht die oben angesprochene Flugzeugfertigung im Vordergrund. Dies ist allerdings nicht beschränkend zu verstehen. Das vorschlagsgemäße Verfahren ist vielmehr überall dort einsetzbar, wo im realen Arbeitsbetrieb der Manipulator 4 mit seinem Tool-Center-Point (TCP) mindestens eine reale Bewegungsbahn B ggf. sensorgestützt abfährt.

Für die Realisierung sensorgestützter Bewegungsbahnen B ist der Manipulator 4 hier und vorzugsweise mit einem Sensor 8, beispielsweise mit einer CCD-Kamera, einem Laser-Tracker, einem Laser-Entfernungssensor o. dgl. ausgestattet.

In der Regel dient der Sensor 8 dem Ausgleich von geometrischen Bauteil- und Lagetoleranzen. Bei einer sensorgestützten Bewegungsbahn B sind zumindest ein Teil der Bahnpunkte abhängig von den jeweiligen Sensormeßwerten. Im Arbeitsbetrieb fährt der Manipulator 4 eine sensorgestützte Bewegungsbahn B in Abhängigkeit von den Sensormeßwerten also in unterschiedlichen Bahnalternativen ab. Es ergeben sich im realen Arbeitsbetrieb Bahnabweichungen von der ursprünglich programmierten Bewegungsbahn.

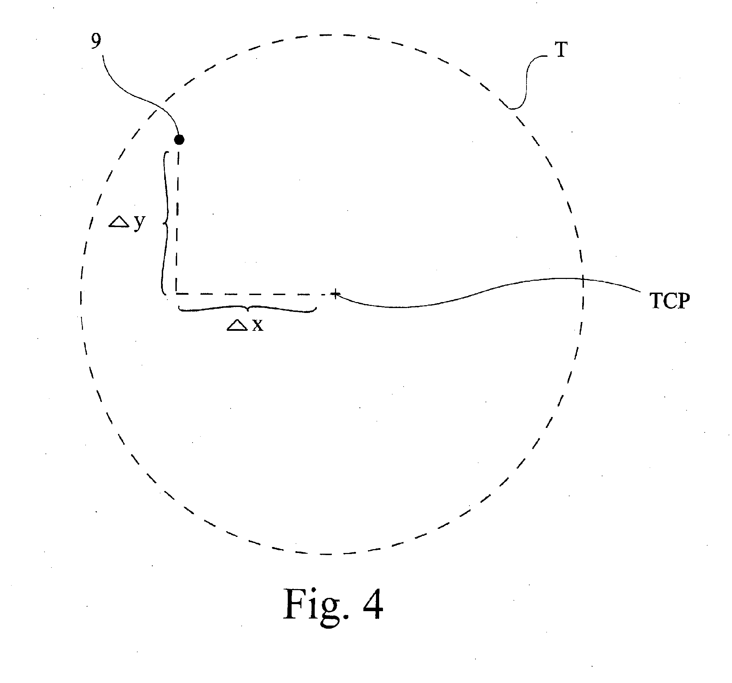

Ein Beispiel für eine sensorgestützte Bewegungsbahn B ist in Fig. 2 dargestellt. Hier geht es wie oben angedeutet darum, Bohrungen 9 anzufahren, um dort Nietoperationen durchzuführen. Bei der Annäherung an eine Bohrung 9 kommt dabei regelmäßig der Sensor 8 in Aktion. Im Falle einer CCD-Kamera stellen sich die Sensormeßwerte dann wie in Fig. 4 gezeigt dar. In der dargestellten Situation ist der TCP durch geometrische Lageabweichungen noch nicht auf die Bohrung 9 zentriert. Es ergibt hier ein erster Sensormeßwert eine notwendige Bahnabweichung in X-Richtung (Δx) und ein zweiter Sensormeßwert eine notwendige Bahnabweichung in y-Richtung (Δy), um die Zentrierung des TCP auf die Bohrung 9 zu erreichen. Diese Richtungsangaben sind hier natürlich nur beispielhaft genannt.

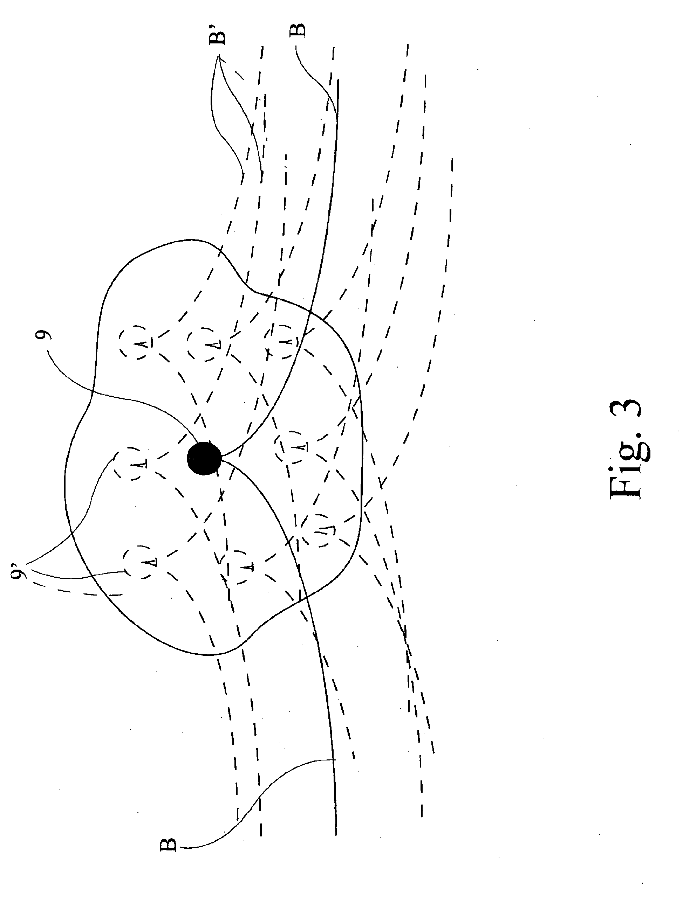

Es ergibt sich also aus einer Zusammenschau der Fig. 2, 3 und 4, dass aufgrund der Lageabweichung der Bohrungen 9 Bahnabweichungen von der Bewegungsbahn B entstehen. An diese Bahnabweichungen sind auch die sich jeweils anschließenden Bewegungsbahnen anzupassen, um einen stetigen Bahnenverlauf zu garantieren. Dies zeigt sich deutlich in der Darstellung gemäß Fig. 3, die in durchgezogener Linie eine anzufahrende Bohrung 9 mit der dazugehörigen Bewegungsbahn B und in gestrichelter Linie verschiedene Lagealternativen 9' mit den dazugehörigen Bahnalternativen B' zeigt.

Sofern sich die Bewegungsbahn B ohnehin in unmittelbarer Nähe einer Singularität des Manipulators 4 befindet, begründen die obigen Bahnabweichungen das Risiko, diese Singularität tatsächlich zu erreichen. Hier setzt die Erfindung an.

Das vorschlagsgemäße Verfahren bedient sich einer Offline-Programmierumgebung 10 mit einer Benutzungschnittstelle 11, die schematisch in Fig. 2 dargestellt ist. In der Offline-Programmierumgebung 10, die vorzugsweise PC-basiert ist, werden ein kinematisches Manipulatormodell und vorzugsweise auch ein Umgebungsmodell gespeichert. Das kinematische Manipulatormodell umfasst alle Daten, die für die Abbildung der Kinematik des Manipulators 4 erforderlich sind. Dazu gehören unter anderem die Lage der Manipulatorachsen 4^{I}-4^{VI}, die Schwenkbereiche der Manipulatorachsen 4^{I}-4^{VI} und weitere konstruktive Details zum kinematischen Aufbau des Manipulators 4.

Das Umgebungsmodell umfasst die geometrischen Daten zu den Komponenten, mit denen der Manipulator 4 wechselwirken soll. Dazu gehören beispielsweise die geometrischen Daten der Strukturbauteile 2, hier der oben genannten Spanten 6.

Die Offline-Programmierumgebung 10 stellt regelmäßig auch eine grafische Simulation der modellierten Komponenten und deren Bewegungen bereit. Mittels der Offline-Programmierumgebung 10 ist es in einer Definitionsroutine möglich, mindestens eine virtuelle Bewegungsbahn b des Manipulators 4 zu definieren. Insoweit entspricht die Offline-Programmierumgebung 10 noch dem üblichen Aufbau.

Wesentlich ist nun, dass ein der jeweiligen virtuellen Bewegungsbahn b zugeordneter virtueller Toleranzraum t definiert werden kann, der Bahnabweichungen von der virtuellen Bewegungsbahn b abbildet.

Diese offline bestimmten Toleranzräume t können auf irgendwelche Bahnabweichungen zurückgehen, die im realen Arbeitsbetrieb zu erwarten sind. Darunter fallen insbesondere die oben beschriebenen Bahnabweichungen beim sensorgestützten Ausgleich von Bauteil- und Lagetoleranzen. Jedem virtuellen Toleranzraum t entspricht ein realer Toleranzraum T, dessen Bedeutung weiter unten erläutert wird. Ein realer Toleranzraum T ist in Fig. 4 nur angedeutet.

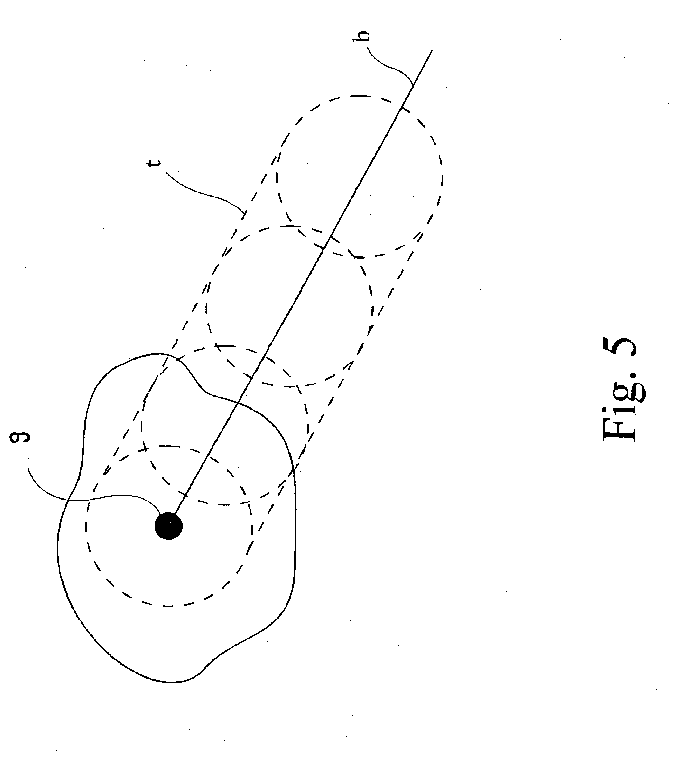

Ein Toleranzraum t lässt sich in noch zu erläuternder Weise weitgehend beliebig definieren. Eine Möglichkeit besteht darin, dass der Toleranzraum t als Volumen definiert wird. Fig. 5 zeigt beispielhaft einen schlauchförmigen Toleranzraum t, der einer Bewegungsbahn b zugeordnet ist.

Eine andere Möglichkeit der Definition eines Toleranzraums t besteht darin, dass der Toleranzraum t als eine Menge von Bahnabschnitten oder als Punktewolke definiert wird. Im Extremfall weist ein Toleranzraum t auch nur einen einzigen Bahnabschnitt oder einen einzigen Punkt auf.

Interessant ist nun die Tatsache, dass der mindestens eine Toleranzraum t einer Singularitätsprüfung unterzogen wird. Im Einzelnen wird mittels der Offline-Programmierumgebung 10 in einer Prüfroutine der zuvor definierte, mindestens eine Toleranzraum t zumindest zum Teil im Hinblick auf kinematische Singularitäten des Manipulators 4 überprüft, wobei im Falle des Auftretens einer Singularität eine entsprechende Singularitätsroutine durchlaufen wird. Die weite Auslegung des Begriffs "Auftreten einer Singularität" wurde weiter oben angesprochen.

Die Durchführung der Prüfroutine ist in ganz unterschiedlichen Varianten denkbar. In einer besonders einfachen Variante wird jeder dem Toleranzraum t zugeordnete Bahnpunkt einzeln im Hinblick auf eine Singularität des Manipulators 4 überprüft. Denkbar ist aber auch, dass ganze Bahnalternativen, die in einem Toleranzraum t abgelegt sind, zusammenhängend überprüft werden, so dass auch Unstetigkeiten in den Bahnalternativen, die ggf. als Singularität in obigem Sinne zu verstehen sind, ermittelt werden.

Im einfachsten und hier bevorzugten Fall ist es vorgesehen, dass die Programmierumgebung 10 bei der Ermittlung einer Singularität mittels der Singularitätsroutine über die Benutzungsschnittstelle 11 eine Warnmeldung an den Benutzer ausgibt.

Als Reaktion auf die Warnmeldung kann der Benutzer die virtuelle Bewegungsbahn b und/oder den dieser Bewegungsbahn b zugeordneten virtuellen Toleranzraum t so verändern, dass die Singularität nicht mehr auftritt.

Sofern die Singularität auf Mehrdeutigkeiten in der Achskonfiguration zurückgeht, besteht eine weitere mögliche Reaktion auf die Warnmeldung darin, dass die virtuelle Bewegungsbahn b in Achskoordinaten definiert wird, so dass die Achskonfiguration von vornherein eindeutig ist. Entsprechend ist die Programmierumgebung 10 vorzugsweise so ausgelegt, dass eine Definition der Bewegungsbahnen b sowohl in karthesischen Koordinaten als auch in Achskoordinaten möglich ist. Denkbar ist aber auch, dass die Programmierumgebung 10 die Vorgabe einer bestimmten Achskonfiguration erlaubt.

Bei dem vorschlagsgemäßen Verfahren ist es vorzugsweise so, dass die Definitionsroutine und die Prüfroutine so oft durchlaufen werden, bis Singularitäten im obigen Sinne nicht mehr auftreten.

Anschließend wird in einer Postprozessorroutine die virtuelle, ggf. sensorgestützte Bewegungsbahn b in Anweisungen eines NC-Programms für den Manipulator 4 umgesetzt.

Schließlich wird das NC-Programm in die NC-Steuerung 12 des Manipulators 4 geladen, so dass die mindestens eine virtuelle, ggf. sensorgestützte Bewegungsbahn b im Programmierbetrieb in eine reale, ggf. sensorgestützte Bewegungsbahn B im realen Arbeitsbetrieb überführt wird. In der Postprozessorroutine wird insbesondere berücksichtigt, ob die virtuelle Bewegungsbahn b in karthesischen Koordinaten oder in Achskoordinaten definiert wird.

Vorzugsweise geht in die Erzeugung des NC-Programms auch der virtuelle Toleranzraum t ein. Dabei ist es vorgesehen, dass das Überschreiten der geometrischen Grenzen des korrespondierenden realen Toleranzraums T im Arbeitsbetrieb steuerungstechnisch gesperrt wird. Dies ist vorzugsweise mit einem Anhalten des Manipulators 4 verbunden. Der Begriff "gesperrt" ist vorliegend weit zu verstehen und nicht auf ein Blockieren der Bewegung des Manipulators 4 beschränkt. Er kann beispielsweise auch ein Überschleifen der Bahnpunkte umfassen derart, dass das Überschreiten der geometrischen Grenzen des korrespondierenden realen Toleranzraums T im Arbeitsbetrieb nicht mehr auftritt.

Neben mindestens einer Bewegungsbahn b ist in der Programmierumgebung 10 vorzugsweise auch mindestens ein Arbeitsablauf gespeichert, der sich u.a. aus einer Folge des Abfahrens von Bewegungsbahnen b und/oder des Abarbeitens von Sensorfunktionen und/oder des Abarbeitens von Technologiefunktionen ergibt. Eine Technologiefunktion besteht beispielsweise in dem Abarbeiten einer Nietoperation. Der Arbeitsablauf ist regelmäßig Teil eines übergeordneten Arbeitsablaufes.

Grundsätzlich ist es denkbar, dass die Definitionsroutine im Wesentlichen manuell abgearbeitet wird. Dann ist es vorzugsweise so, dass in der Definitionsroutine die mindestens eine virtuelle Bewegungsbahn b über die Benutzungsschnittstelle 11 eingegeben oder geändert, insbesondere virtuell geteacht wird. Denkbar ist aber auch, dass in der Definitionsroutine die mindestens eine virtuelle Bewegungsbahn b weitgehend automatisch, vorzugsweise basierend auf dem gespeicherten Arbeitsablauf, generiert wird. Eine solche automatische Bahnplanung wird beispielsweise aus dem eine Reihe von Nietoperationen umfassenden Arbeitsablauf generiert. Die automatische Bahnplanung stellt eine für den Benutzer besonders komfortable Variante bereit.

In einer besonders einfach zu realisierenden Alternative lässt sich der Toleranzraum t in der Definitionsroutine manuell über die Benutzungsschnittstelle 11 eingeben oder ändern. Denkbar ist aber auch hier eine automatische oder halbautomatische Definition.

Für die manuelle Definition des Toleranzraums t mittels der Programmierumgebung 10 sind verschiedene Varianten denkbar. Für den Fall der Definition als Volumen ist es vorzugsweise vorgesehen, dass sich der Toleranzraum t in verschiedenen Geometrien definieren lässt. Hierfür bietet es sich vorzugsweise an, dass der Toleranzraum t im Wesentlichen schlauchartig, sich um die zugeordnete virtuelle Bewegungsbahn b legend, definiert wird (Fig. 5). Es ist aber auch denkbar, den Toleranzraum t rechteckig o. dgl. auszugestalten. Vorzugsweise stellt die Programmierumgebung 10 hierfür eine Art Baukasten von Geometrien bereit, aus denen der Toleranzraum t zusammengestellt werden kann.

Für den Fall der Definition des Toleranzraums t durch eine Menge von Bahnabschnitten ist es dagegen denkbar, dass der Benutzer in der grafischen Simulation einen Abschnitt einer bereits definierten Bewegungsbahn b durch entsprechende Benutzereingaben auswählt, eine gewünschte Bahnabweichung vorgibt und dem jeweiligen Toleranzraum t zuweist. Dies kann je nach angestrebter Menge von Bahnabschnitten beliebig wiederholt werden.

Für den Fall der Definition des Toleranzraums t durch eine Punktewolke ist es schließlich denkbar, dass der Benutzer einzelne Punkte in der grafischen Simulation anwählt und dem jeweiligen Toleranzraum t zuweist.

Unabhängig von der Definition des jeweiligen Toleranzraums t kann der Toleranzraum t vorteilhafterweise automatisch oder jedenfalls halbautomatisch bestimmt werden. Hierfür ist es vorzugsweise vorgesehen, dass das Manipulatormodell ein Sensormodell umfasst, in dem jedenfalls der Sensor-Messbereich abgebildet ist. Ferner umfasst das Sensormodell auch den Zusammenhang zwischen Sensormeßwerten und den daraus resultierenden Bewegungen des Manipulators 4. Daraus lässt sich zumindest der grundsätzliche Aufbau des resultierenden Toleranzraums t automatisch bestimmen. Vorzugsweise wird der Toleranzraum t dann zumindest zum Teil aus der Arbeitsabfolge und/oder dem Sensormodell und/oder ggf. weiteren Benutzereingaben ermittelt. Die Benutzereingaben betreffen beispielsweise eine Größenbegrenzung des Toleranzraums t.

Heutige NC-Steuerungen 12 für Manipulatoren 4 sind regelmäßig mit einer automatischen Achskompensation ausgestattet. Die Achskompensation stellt für mindestens eine Manipulatorachse 4^{I}-4^{VI} einen Achs-Offset ein, um Veränderungen der Manipulatorkinematik Rechnung zu tragen. Solche Veränderungen der Manipulatorkinematik gehen auf vordefinierte Umgebungsbedingungen, wie Temperatur, Last o. dgl. zurück.

Die obige Achskompensation führt bei unveränderter absoluter Lage des TCP zu einer Veränderung der Achskonfiguration. Dies kann grundsätzlich dazu führen, dass die Achskonfiguration durch die Achskompensation singulär wird. Um das Anfahren einer singulären Achskonfiguration offline zu überprüfen, wird in der Definitionsroutine der mindestens eine Toleranzraum t zumindest zum Teil aus den fiktiven Bahnabweichungen ermittelt, die sich maximal in jedem Bahnpunkt bei originärer Manipulatorkinematik aus der Achskompensation ergeben können. Die den Toleranzraum t definierende Bahnabweichung ergibt sich also schlicht durch Beaufschlagung der einzelnen Manipulatorachsen 4^{I}-4^{VI} mit den jeweiligen, theoretischen Achs-Offsets aus der Achskompensation bei originärer Manipulatorkinematik.

Es ist sachgerecht, dass zur Bestimmung des Toleranzraums t die aus der Achskompensation ermittelten Abweichungen zu den auf die geometrischen Lageabweichungen zurückgehenden Abweichungen addiert werden. Der Grund hierfür besteht darin, dass sich diese Abweichungen im realen Arbeitsbetrieb in gewisser Weise ebenfalls überlagern.

Eine besonders realitätsnahe Offline-Programmierung ergibt sich in steuerungstechnischer Hinsicht, wenn der NC-Kern der realen NC-Steuerung 12 in der Programmierumgebung 10 abgebildet ist. In besonders bevorzugter Ausgestaltung handelt es sich bei dem "virtuellen" NC-Kern sogar um eine softwaremäßige Kopie des "realen" NC-Kerns. Jedenfalls ist es vorzugsweise so, dass eine Transformationsroutine vorgesehen ist, mittels der eine Rücktransformation von Positions- und Orientierungsdaten in Manipulator-Achsdaten durchführbar ist, wobei weiter vorzugsweise die Transformationsroutine in der Programmierumgebung 10 identisch zu der entsprechenden Transformationsroutine der NC-Steuerung 12 ist.

Für die Durchführung der Prüfroutine spielt die Transformationsroutine eine wesentliche Rolle. Mittels der Transformationsroutine wird nämlich vorzugsweise jeder dem Toleranzraum t zugeordnete Bahnpunkt in einer Variante daraufhin überprüft, ob der Punkt von der Manipulatorkinematik erreichbar ist.

Alternativ oder zusätzlich kann es vorgesehen sein, dass in der Prüfroutine mittels der Transformationsroutine vorzugsweise jeder dem Toleranzraum t zugeordnete Bahnpunkt daraufhin überprüft wird, ob der Punkt zu Mehrdeutigkeiten in den Achsdaten des Manipulators 4 führt.

Alternativ oder zusätzlich kann es weiter vorgesehen sein, dass eine Kollisionsroutine vorgesehen ist, mittels der eine Kollisionsüberprüfung im Hinblick auf eine Kollision des Manipulators 4 mit den im Umgebungsmodell abgebildeten Komponenten möglich ist, wobei in der Prüfroutine mittels der Kollisionsroutine vorzugsweise jeder dem Toleranzraum t zugeordnete Bahnpunkt daraufhin überprüft wird, ob das Anfahren des Punktes zu einer Kollision des Manipulators 4 mit den im Umgebungsmodell gespeicherten Komponenten führt.

Es lässt sich zusammenfassen, dass die Möglichkeit der Definition eines virtuellen Toleranzraums t in der Programmierumgebung 10 erlaubt, alle zu erwartenden Bahnabweichungen von einer programmierten Bewegungsbahn offline im Hinblick auf Singularitäten jedweder Art hin zu überprüfen. Damit lassen sich Produktionsunterbrechungen, die auf das Auftreten von Singularitäten zurückgehen, weitgehend ausschließen.

In besonders bevorzugter Ausgestaltung handelt es sich bei dem Manipulator 4 um einen Roboter mit serieller Kinematik, vorzugsweise um einen insbesondere 6-achsigen Knickarmroboter wie in Fig. 2 dargestellt. Andere Varianten für den Manipulator 4 sind denkbar.

Schließlich wurde schon darauf hingewiesen, dass hier und vorzugsweise der Manipulator 4 ein Werkzeug 7 führt, nämlich vorzugsweise ein Nietwerkzeug 7. Auch hier sind zahlreiche andere Varianten denkbar.

## Patentansprüche

1. Verfahren zur Offline-Programmierung eines NC-gesteuerten Manipulators (4), der im Arbeitsbetrieb mit seinem Tool-Center-Point (TCP) mindestens eine reale Bewegungsbahn (B) ggf. sensorgestützt abfährt,
wobei in einer Offline-Programmierumgebung (10) mit Benutzungsschnittstelle (11) ein kinematisches Manipulatormodell und ggf. ein Umgebungsmodell gespeichert werden,
wobei mittels der Offline-Programmierumgebung (10) in einer Definitionsroutine mindestens eine virtuelle Bewegungsbahn (b) des Manipulators (4) und ein dieser virtuellen Bewegungsbahn (b) zugeordneter virtueller Toleranzraum (t) definiert werden,
wobei mittels der Offline-Programmierumgebung (10) in einer Prüfroutine der zuvor definierte virtuelle Toleranzraum (t) zumindest zum Teil im Hinblick auf kinematische Singularitäten des Manipulators (4) überprüft wird, bei deren Auftreten eine Singularitätsroutine durchlaufen wird, und wobei anschließend in einer Postprozessorroutine die virtuelle Bewegungsbahn (b) in Anweisungen eines NC-Programms für den Manipulator (4) umgesetzt wird,
**dadurch gekennzeichnet,**
**dass** der virtuelle Toleranzraum (t) Bahnabweichungen von der virtuellen Bewegungsbahn (b) abbildet.

2. Verfahren nach Anspruch 1, **dadurch gekennzeichnet, dass** die Programmierumgebung (10) in der Singularitätsroutine über die Benutzungsschnittstelle (11) eine Warnmeldung an den Benutzer ausgibt.

3. Verfahren nach Anspruch 1 oder 2, **dadurch gekennzeichnet, dass** in einer Postprozessorroutine die virtuelle, ggf. sensorgestützte Bewegungsbahn (b) in Anweisungen eines NC-Programms für den Manipulator (4) umgesetzt wird, das in die NC-Steuerung (12) des Manipulators (4) geladen wird, so dass die mindestens eine virtuelle, ggf. sensorgestützte Bewegungsbahn (b) im Programmierbetrieb in eine reale, ggf. sensorgestützte Bewegungsbahn (B) im Arbeitsbetrieb überführt wird.

4. Verfahren nach Anspruch 3, **dadurch gekennzeichnet, dass** der virtuelle Toleranzraum (t) derart in die Erzeugung des NC-Programms eingeht, dass das Überschreiten der Grenzen des korrespondierenden realen Toleranzraums (T) im Arbeitsbetrieb steuerungstechnisch gesperrt wird und vorzugsweise zu einem Anhalten des Manipulators (4) führt.

5. Verfahren nach einem der vorhergehenden Ansprüche, **dadurch gekennzeichnet, dass** mindestens ein Arbeitsablauf, der sich u.a. aus einer Folge des Abfahrens von Bewegungsbahnen (B) und/oder des Abarbeitens von Sensorfunktionen und/oder des Abarbeitens von Technologiefunktionen ergibt, in der Programmierumgebung (10) gespeichert wird.

6. Verfahren nach einem der vorhergehenden Ansprüche, **dadurch gekennzeichnet, dass** in der Definitionsroutine die mindestens eine virtuelle Bewegungsbahn (b) über die Benutzungsschnittstelle (11) eingegeben oder geändert, insbesondere virtuell geteacht wird, oder, dass in der Definitionsroutine die mindestens eine virtuelle Bewegungsbahn (b) automatisch, ggf. basierend auf dem gespeicherten Arbeitsablauf, generiert wird.

7. Verfahren nach einem der vorhergehenden Ansprüche, **dadurch gekennzeichnet, dass** in der Definitionsroutine der Toleranzraum (t) manuell über die Benutzungsschnittstelle (11) eingegeben oder geändert wird.

8. Verfahren nach einem der vorhergehenden Ansprüche, **dadurch gekennzeichnet, dass** sich der Toleranzraum (t) mittels der Programmierumgebung (10) in verschiedenen Geometrien definieren lässt, vorzugsweise, dass der Toleranzraum (t) im Wesentlichen schlauchartig, sich um die zugeordnete virtuelle Bewegungsbahn (b) legend, definiert wird.

9. Verfahren nach einem der vorhergehenden Ansprüche, **dadurch gekennzeichnet, dass** das Manipulatormodell ein Sensormodell umfasst, in dem der Sensor-Meßbereich, und, vorzugsweise, der Zusammenhang zwischen Sensormeßwerten und den daraus resultierenden Bewegungen des Manipulators (4), abgebildet ist.

10. Verfahren nach einem der vorhergehenden Ansprüche, **dadurch gekennzeichnet, dass** in der Definitionsroutine der mindestens eine Toleranzraum (t) zumindest zum Teil aus der Arbeitsabfolge und/oder dem Sensormodell und/oder ggf. weiteren Benutzereingaben ermittelt wird.

11. Verfahren nach einem der vorhergehenden Ansprüche, **dadurch gekennzeichnet, dass** die NC-Steuerung (12) des Manipulators (4) eine automatische Achskompensation bereitstellt, die für mindestens eine Manipulatorachse (4^{I}-4^{VI}) einen Achs-Offset einstellt, um geometrischen Veränderungen der Manipulatorkinematik Rechnung zu tragen, die auf vordefinierte Umgebungsbedingungen wie Temperatur, Last o. dgl. zurückgehen und dass in der Definitionsroutine der mindestens eine Toleranzraum (t) zumindest zum Teil aus den fiktiven Bahnabweichungen ermittelt wird, die sich maximal in jedem Bahnpunkt bei unterstellter originärer Manipulatorkinematik aus der Achskompensation ergeben können.

12. Verfahren nach einem der vorhergehenden Ansprüche, **dadurch gekennzeichnet, dass** zur Bestimmung des Toleranzraums (t) die aus der Achskompensation ermittelten Bahnabweichungen zu den auf die Sensorunterstützung zurückgehenden Bahnabweichungen addiert werden.

13. Verfahren nach einem der vorhergehenden Ansprüche, **dadurch gekennzeichnet, dass** eine Transformationsroutine vorgesehen ist, mittels der eine Rücktransformation von Positions- und Orientierungsdaten in Manipulator-Achsdaten durchführbar ist, vorzugsweise, dass die Transformationsroutine identisch zu der entsprechenden Transformationsroutine der NC-Steuerung (12) ist.

14. Verfahren nach Anspruch 13, **dadurch gekennzeichnet, dass** in der Prüf routine mittels der Transformationsroutine vorzugsweise jeder Punkt des Toleranzraums (t) daraufhin überprüft wird, ob der Punkt von der Manipulatorkinematik erreichbar ist.

15. Verfahren nach Anspruch 13 oder 14, **dadurch gekennzeichnet, dass** in der Prüfroutine mittels der Transformationsroutine vorzugsweise jeder Punkt des Toleranzraums (t) daraufhin überprüft wird, ob der Punkt zu Mehrdeutigkeiten in den Achsdaten des Manipulators (4) führt.

16. Verfahren nach einem der vorhergehenden Ansprüche, **dadurch gekennzeichnet, dass** eine Kollisionsroutine vorgesehen ist, mittels der eine Kollisionsüberprüfung im Hinblick auf eine Kollision des Manipulators (4) mit den im Umgebungsmodell abgebildeten Komponenten möglich ist und dass in der Prüfroutine mittels der Kollisionsroutine vorzugsweise jeder Punkt des Toleranzraums (t) daraufhin überprüft wird, ob das Anfahren des Punktes zu einer Kollision des Manipulators (4) mit den im Umgebungsmodell gespeicherten Komponenten führt.

## Claims

1. Method for the off-line programming of an NC-controlled manipulator (4) which follows at least one real movement path (B), possibly in a sensor-supported manner, with its tool centre point (TCP) in the working mode,
a kinematic manipulator model and possibly an environment model being stored in an off-line programming environment (10) with a user interface (11),
at least one virtual movement path (b) of the manipulator (4) and a virtual tolerance space (t) assigned to this virtual movement path (b) being defined in a definition routine by means of the off-line programming environment (10),
the previously defined virtual tolerance space (t) being at least partially checked with regard to kinematic singularities of the manipulator (4) in a test routine by means of the off-line programming environment (10), the occurrence of which singularities results in a singularity routine being run through, and the virtual movement path (b) then being converted into instructions of an NC program for the manipulator (4) in a post-processor routine,
**characterized in that**
the virtual tolerance space (t) depicts path deviations from the virtual movement path (b).

2. Method according to Claim 1, **characterized in that** the programming environment (10) outputs a warning message to the user via the user interface (11) in the singularity routine.

3. Method according to Claim 1 or 2, **characterized in that** the virtual, possibly sensor-supported, movement path (b) is converted into instructions of an NC program for the manipulator (4) in a post-processor routine, which program is loaded into the NC controller (12) of the manipulator (4), with the result that the at least one virtual, possibly sensor-supported, movement path (b) in the programming mode is converted into a real, possibly sensor-supported, movement path (B) in the working mode.

4. Method according to Claim 3, **characterized in that** the virtual tolerance space (t) is included in the generation of the NC program in such a manner that the exceeding of the limits of the corresponding real tolerance space (T) is blocked using control technology in the working mode and preferably results in the manipulator (4) being stopped.

5. Method according to one of the preceding claims, **characterized in that** at least one workflow, which results, inter alia, from a sequence of following movement paths (B) and/or executing sensor functions and/or executing technology functions, is stored in the programming environment (10).

6. Method according to one of the preceding claims, **characterized in that** the at least one virtual movement path (b) is input or changed, in particular is virtually taught, via the user interface (11) in the definition routine, or **in that** the at least one virtual movement path (b) is generated automatically, possibly on the basis of the stored workflow, in the definition routine.

7. Method according to one of the preceding claims, **characterized in that** the tolerance space (t) is manually input or changed via the user interface (11) in the definition routine.

8. Method according to one of the preceding claims, **characterized in that** the tolerance space (t) can be defined in different geometries by means of the programming environment (10), preferably **in that** the tolerance space (t) is defined in a substantially tubelike manner lying around the associated virtual movement path (b).

9. Method according to one of the preceding claims, **characterized in that** the manipulator model comprises a sensor model which depicts the sensor measurement range and preferably the relationship between sensor measured values and the resulting movements of the manipulator (4).

10. Method according to one of the preceding claims, **characterized in that** the at least one tolerance space (t) is at least partially determined from the working sequence and/or the sensor model and/or possibly further user inputs in the definition routine.

11. Method according to one of the preceding claims, **characterized in that** the NC controller (12) of the manipulator (4) provides automatic axis compensation which sets an axis offset for at least one manipulator axis (4^{I}-4^{VI}) in order to take into account geometric changes in the manipulator kinematics which trace back to predefined environmental conditions such as temperature, load or the like, and **in that** the at least one tolerance space (t) is at least partially determined in the definition routine from the fictitious path deviations which may result at most from the axis compensation at each path point with assumed original manipulator kinematics.

12. Method according to one of the preceding claims, **characterized in that**, in order to determine the tolerance space (t), the path deviations determined from the axis compensation are added to the path deviations which trace back to the sensor support.

13. Method according to one of the preceding claims, **characterized in that** a transformation routine is provided and can be used to carry out a back transformation of position data and orientation data into manipulator axis data, preferably **in that** the transformation routine is identical to the corresponding transformation routine of the NC controller (12).

14. Method according to Claim 13, **characterized in that** each point of the tolerance space (t) is preferably checked in the test routine by means of the transformation routine in order to determine whether the point can be reached by the manipulator kinematics.

15. Method according to Claim 13 or 14, **characterized in that** each point of the tolerance space (t) is preferably checked in the test routine by means of the transformation routine in order to determine whether the point results in ambiguities in the axis data relating to the manipulator (4).

16. Method according to one of the preceding claims, **characterized in that** a collision routine is provided and enables a collision check with regard to a collision between the manipulator (4) and the components depicted in the environment model, and **in that** each point of the tolerance space (t) is preferably checked in the test routine by means of the collision routine in order to determine whether the process of approaching the point results in a collision between the manipulator (4) and the components stored in the environment model.

## Revendications

1. Procédé de programmation hors ligne d'un manipulateur commandé par NC (4) qui, dans le domaine de fonctionnement, au moyen de son point d'effecteur (TCP, Tool Center Point), parcourt une trajectoire de déplacement réelle (B) ou à base de capteurs,
dans lequel un modèle de manipulateur cinématique et le cas échéant un modèle d'environnement sont stockés dans un environnement de programmation hors ligne (10) comportant une interface utilisateur (11),
dans lequel au moins une trajectoire de déplacement virtuelle (b) du manipulateur (4) et une zone de tolérance virtuelle (t) associée à ladite trajectoire virtuelle (b) sont définies au moyen de l'environnement de programmation hors ligne (10) dans un sous-programme de définition,
dans lequel il est vérifié au moyen de l'environnement de programmation hors ligne (10) dans un sous-programme de test de la zone de tolérance virtuelle préalablement définie (t) s'il existe au moins en partie des singularités cinématiques du manipulateur (4) lors de l'apparition desquelles un sous-programme de singularité est exécuté, et dans lequel la trajectoire de déplacement virtuelle (b) est ensuite convertie dans un sous-programme de post-traitement en des instructions d'un programme NC destiné au manipulateur (4),
**caractérisé en ce que** la zone de tolérance (t) représente des écarts de trajectoire par rapport à la trajectoire de déplacement virtuelle (b).

2. Procédé selon la revendication 1, **caractérisé en ce que** l'environnement de programmation (10) délivre à l'utilisateur un message d'alarme dans le sous-programme de singularité par l'intermédiaire de l'interface utilisateur (11).

3. Procédé selon la revendication 1 ou 2, **caractérisé en ce que** la trajectoire de déplacement virtuelle ou à base de capteurs (b) est convertie dans un sous-programme de post-traitement en des instructions d'un programme NC destinées au manipulateur (4), lequel programme NC est chargé dans l'unité de commande NC (12) du manipulateur (4) de manière à ce que l'au moins une trajectoire de déplacement virtuelle ou à base de capteurs (b) en mode programmé soit convertie en une trajectoire de déplacement réelle ou à base de capteurs (B) en mode de fonctionnement.

4. Procédé selon la revendication 3, **caractérisé en ce que** la zone de tolérance virtuelle (t) intervient dans la création du programme NC de telle manière qu'un dépassement des limites de la zone de tolérance réelle correspondante (T) en mode de fonctionnement soit empêché par le système de commande et conduise de préférence à un arrêt du manipulateur (4).

5. Procédé selon l'une quelconque des revendications précédentes, **caractérisé en ce qu'**au moins une séquence de fonctionnement qui se produit entre autres à partir d'une séquence du parcours de trajectoires de déplacement (B) et/ou du traitement de fonctions de capteurs et/ou du traitement de fonctions technologiques, est stockée dans l'environnement de programmation (10).

6. Procédé selon l'une quelconque des revendications précédentes, **caractérisé en ce que** l'au moins une trajectoire de déplacement virtuelle (b) est fournie en entrée ou modifiée dans le sous-programme de définition par l'intermédiaire de l'interface utilisateur (11), et est notamment soumise à un apprentissage virtuel ou **en ce que** l'au moins une trajectoire de déplacement virtuelle (b) est automatiquement générée ou est générée dans le sous-programme de définition sur la base de la séquence de fonctionnement stockée.

7. Procédé selon l'une quelconque des revendications précédentes, **caractérisé en ce que** la zone de tolérance (t) est fournie en entrée ou modifiée manuellement par l'intermédiaire de l'interface utilisateur (11) dans le sous-programme de définition.

8. Procédé selon l'une quelconque des revendications précédentes, **caractérisé en ce que** la zone de tolérance (t) est définie au moyen de l'environnement de programmation (10) dans différentes géométries, et de préférence, **en ce que** la zone de tolérance (t) est essentiellement définie sous la forme d'une légende tubulaire entourant la trajectoire de déplacement virtuelle associée (b).

9. Procédé selon l'une quelconque des revendications précédentes, **caractérisé en ce que** le modèle de manipulateur comprend un modèle de capteur dans lequel sont représentés le domaine de mesure des capteurs et, de préférence, la relation entre les valeurs de mesure des capteurs et les déplacements qui en résultent du manipulateur (4).

10. Procédé selon l'une quelconque des revendications précédentes, **caractérisé en ce que** l'au moins une zone de tolérance (t) est déterminée au moins en partie dans le sous-programme de définition à partir de la séquence de fonctionnement et/ou du modèle de capteur et/ou le cas échéant d'autres entrées de données de l'utilisateur.

11. Procédé selon l'une quelconque des revendications précédentes, **caractérisé en ce que** l'unité de commande NC (12) du manipulateur (4) fournit une compensation axiale automatique qui ajuste un décalage axial pour au moins un axe de manipulateur (4^{I}-4^{VI}) afin de prendre en compte des modifications géométriques de la cinématique du manipulateur qui sont liées à des conditions ambiantes prédéfinies telles que la température, la charge, ou autres, et **en ce que** l'au moins une zone de tolérance (t) est au moins en partie obtenue dans le sous-programme de définition à partir des écarts de trajectoire fictifs qui peuvent se produire de manière maximale en chaque point de la trajectoire pour une cinématique de manipulateur originale supposée à partir de la compensation axiale.

12. Procédé selon l'une quelconque des revendications précédentes, **caractérisé en ce que**, pour déterminer la zone de tolérance (t), les écarts de trajectoire obtenus à partir de la compensation axiale sont ajoutés aux écarts de trajectoire liés à l'utilisation de capteurs.

13. Procédé selon l'une quelconque des revendications précédentes, **caractérisé en ce qu'**il est prévu un sous-programme de transformation au moyen duquel une transformation inverse de données de position et d'orientation peut être effectuée dans des données d'axe de manipulateur et de préférence, **en ce que** le sous-programme de transformation est identique au sous-programme de transformation correspondant de l'unité de commande NC (12).

14. Procédé selon la revendication 13, **caractérisé en ce que** chaque point de la zone de tolérance (t) est soumis dans le sous-programme de test, au moyen du sous-programme de transformation, à une vérification destinée à déterminer si le point peut être atteint par la cinématique du manipulateur.

15. Procédé selon la revendication 13 ou 14, **caractérisé en ce que** chaque point de la zone de tolérance (t) est de préférence soumis, dans le sous-programme de test, au moyen du sous-programme de transformation, à une vérification destinée à déterminer si le point conduit à des ambiguïtés dans les données d'axe du manipulateur (4).

16. Procédé selon l'une quelconque des revendications précédentes, **caractérisé en ce qu'**il est prévu un sous-programme de collision au moyen duquel un test de collision destiné à déterminer un risque de collision du manipulateur (4) avec les composants représentés dans le modèle d'environnement est possible et **en ce que** chaque point de la zone de tolérance (t) est de préférence soumis, dans le sous-programme de test, au moyen du sous-programme de collision à un test destiné à déterminer si le déplacement du point conduit à une collision du manipulateur (4) avec des composants stockés dans le modèle d'environnement.
